Europäisches Patentamt

(19) European Patent Office

Office européen des brevets

(11) Publication number : **0 370 664 B1**

(12) # EUROPEAN PATENT SPECIFICATION

(45) Date of publication of patent specification :
09.09.92 Bulletin 92/37

(51) Int. Cl.⁵ : **B60C 1/00, B60C 11/00**

(21) Application number : **89311693.9**

(22) Date of filing : **10.11.89**

(54) Aircraft tyres.

(30) Priority : **23.11.88 GB 8827338**

(43) Date of publication of application :
30.05.90 Bulletin 90/22

(45) Publication of the grant of the patent :
09.09.92 Bulletin 92/37

(84) Designated Contracting States :
**FR GB**

(56) References cited :
EP-A- 0 097 787
LU-A- 64 852
US-A- 4 396 052

(73) Proprietor : **SUMITOMO RUBBER INDUSTRIES LIMITED**
**No. 1-1, Tsutsui-cho 1-chome**
**Chuo-ku Kobe-shi Hyogo 651 (JP)**

(72) Inventor : **Stephens, Paul**
**67 Alexandra Road**
**Halesowen West Midlands B63 4DJ (GB)**

(74) Representative : **Stewart, Charles Geoffrey**
**SP TYRES UK LIMITED Tyre Technical Division**
**Fort Dunlop Birmingham B24 9QT (GB)**

## Description

This invention relates to a tyre for an aircraft, according to the preamble of claim 1. Such a tyre is known, e.g. from US-A-4 396 052.

Aircraft tyre treads are subjected to particularly high service conditions and at the high loads and speeds which they operate are prone to generating high temperatures in the tread which may lead to damage to the casing and in some cases "chunk out" of parts of tyre tread itself. Prior constructions have proposed the use of a top cap/sub tread in the tyre tread region using a sub tread material which provides low temperature generation in running of the tyre so that the tyre temperatures are reduced to avoid the problems which may occur. Such tyres however, are still prone to chunking out and the advantages intended by the construction proposed so far have not been successful.

It is an object of the present invention to provide an aircraft tyre which gives resistance to casing damage and chunking out of the tread with the addition of improved wear resistance in the tyre tread.

According to one aspect of the present invention the above object is achieved by the features of claim 1.

As will be realised this is not a typical top cap/sub tread construction as known in the prior art because the sub tread material properties of hardness and resiliance make it not a conventional low temperature generation compound. Indeed in contrast to the prior art sub tread compounds this particular compound has substantial resistance to damage under shock load which provides the chunk out resistance of the tyre. At the same time the properties chosen for the tread rubber which contacts the ground surface provides high wear resistance.

The wear resistant tread rubber compound is preferably based on natural rubber and butadiene rubber blended where the blend contains 10 - 90 parts per 100 of butadiene rubber or more preferably 30 - 50 parts per hundred butadiene.

The sub tread rubber compound preferably is based on natural rubber.

Further aspects of the present invention will be made apparent from the following description, by way of example only, of one embodiment of the invention in conjunction with the attached diagrammatic drawing which is a cross sectional view of an aircraft tyre.

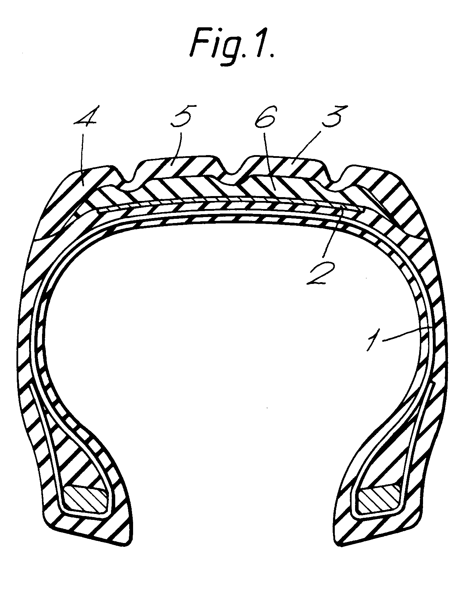

The tyre shown in the drawing comprises a radial ply aircraft tyre having a casing 1, i.e. a main carcass ply reinforcement structure 1 extending from bead to bead around the toroidal air containing chamber of the tyre and a tread reinforcing breaker structure 2 positioned above the central or crown region of the casing 1 between it and the ground engaging tread surface 3.

Between the breaker 2 and the ground engaging tread surface 3 is the tread region of the tyre 4. The tread region of the tyre comprises a top cap 5 of wear resistant rubber compound and a sub tread layer 6. The compounds for the top cap 5 and sub tread 6 are specially selected to give a good compromise between wear resistance and damage resistance. The top cap rubber compound is a blend of natural rubber and butadiene rubber according to the following formulation.

|  | Parts per hundred of rubber (pph) |
|---|---|
| Natural rubber | 60 |
| Butadiene rubber | 40 |
| Zinc Oxide | 5 |
| Stearic acid | 2 |
| Carbon black N375 | 52 |
| Process oil | 8 |
| Tack resin | 4 |
| Antidegradants | 2.5 |
| MBS | 1 |
| Sulphur | 2.2 |

The resultant top cap material has a hardness of 63 IRHD, a resilience at 50 degrees centigrade of 69% an abrasion resistance rating of 140 DIN abrasion units and a tear strength of 170 Newtons.

The sub tread material is based on natural rubber and comprises the following formulation.

|  | Parts per hundred of rubber (pph) |
|---|---|
| Natural Rubber | 100 |
| Zinc Oxide | 4 |
| Stearic acid | 2 |
| Carbon black N110 | 30 |
| Carbon black N326 | 25 |
| Antidegradants | 3.5 |
| Sulphur | 1 |
| MBS | 1.5 |

The resultant rubber compound has a hardness of 65 IRHD degrees a resilience of 65% at 50 degrees centigrade, an abrasion resistance of 90 and a tear strength of 280 Newtons.

The sub tread material is a particularly damage resistant material and this provides in the ground engaging top cap material great strength to resist chunking out of sections of top cap material. The top cap material provides wear resistance on the tyre.

This tread construction may be used on radial aircraft tyres or on crossply aircraft tyres with advantage.

## Claims

1. An aircraft tyre comprising an annular casing (1) and a tread region (4) wherein the tread region comprises a ground contacting layer (5) of wear resistant tread rubber compound having a hardness greater than 55 I.R.H.D. and a sub-tread layer (6) of rubber compound characterised in that the damage resistant rubber compound of the sub-tread layer (6) has a hardness greater than 55 I.R.H.D. and the ground contacting layer (5) and the sub-tread layer (6) have a resilience of 60-75% at 50 degrees Centigrade measured using the Dunlop pendulum and tear strengths of greater than 150 Newtons and 260-300 Newtons respectively tested according to ASTM Test No D624 using Die B and the ground contacting layer (5) has a high abrasion resistance of at least 120%, abrasion resistance being defined as

$$\frac{\text{Volume loss of standard compound}}{\text{Volume loss of test compound}} \times 100\%$$

and the test being carried out on a machine conforming to the DIN 53516 Standard, using safety walk as the abrasive surface and a standard compound composition consisting of:

|  | Parts per handered (pph) |
|---|---|
| SMR 10 | 100 |
| IRB5 | 50 |
| Stearic Acid | 2 |
| Zinc Oxide | 5 |
| CBS | 0.5 |
| Sulphur | 2.5 |
| IPPD | 1.0 |

2. A tyre according to claim 1 characterised in that the ground wear resistant treat rubber compound comprises a natural rubber and butadiene rubber blend containing 10 to 90 parts per hundred of rubber of butadiene rubber.

3. A tyre according to claim 1 characterised in that the ground contacting wear resistant tread rubber compound comprises a natural rubber and butadiene rubber blend containing 30-50 parts per hundred rubber of butadiene rubber.

4. A tyre according to any one of claims 1 to 3 characterised in that the sub tread rubber compound comprises natural rubber.

## Patentansprüche

1. Luftreifen für Flugzeuge, umfassend einen ringförmigen Unterbau (1) und einen Laufflächenbereich (4), wobei der Laufflächenbereich eine Bodenkontaktschicht (5) aus verschleißfester Laufflächenkautschukmischung mit einer Härte gröber als 55 I.R.H.D. und eine Laufflächenunterschicht (6) aus Kautschukmischung umfaßt, dadurch gekennzeichnet, daß die beschädigungsresistente Kautschukmischung der Laufflächenunterschicht (6) eine Härte von größer als 55 I.R.H.D. besitzt und die Bodenkontaktschicht (5) und die Laufflächenunterschicht (6) eine Elastizität von 60-75% bei 50° C, gemessen unter Verwendung des Dunlop-Pendels, und Ausrißfestigkeiten von größer als 150 Netwon bzw. 260 Newton, gemessen nach der Norm ASTM Test Nr. D 624 unter Verwendung des Werkzeuges B, haben, und die Bodenkontaktschicht (5) eine hohe Abriebfestigkeit von wenigstens 120% besitzt, wobei die Abriebfestigkeit definiert ist als:

$$\frac{\text{Volumenverlustvon Standardmischung}}{\text{Volumenverlustvon Testmischung}} \times 100\%$$

und der Test auf einer Maschine entsprechend der Norm DIN 53516 unter Verwendung eines Sicherheitsbelages als Abrieboberfläche und einer Standardmischung, bestehend aus:

Teile pro Hundert (pph)

| | |
|---|---|
| SMR | 100 |
| IRB 5 | 50 |
| Stearinsäure | 2 |
| Zinkoxid | 5 |
| CBS | 0,5 |
| Schwefel | 2,5 |
| IPPD | 1,0 |

durchgeführt wird.

2. Reifen nach Anspruch 1, dadurch gekennzeichnet, daß die verschleißfeste Bodenlaufflächenkautschukmischung eine Naturkautschuk- und Butadienkautschukmischung mit einem Gehalt von 10 bis 90 Teilen Butadienkautschuk pro 100 Teile Kautschuk umfaßt.

3. Reifen nach Anspruch 1, dadurch gekennzeichnet, daß die verschleißfeste Bodenkontakt-Laufflächenkautschukmischung eine Naturkautschuk- und Butadienkautschukmischung mit einem Gehalt von 30-50 Teilen Butadienkautschuk pro 100 Teile Kautschük umfaßt.

4. Reifen nach einem der Ansprüche 1 bis 3, dadurch gekennzeichnet, daß die Unter-Laufflächenkautschukmischung Naturkautschuk umfaßt.

**Revendications**

1. Pneumatique pour aéronef comprenant une carcasse annulaire (1) et une région (4) de bande de roulement, dans lequel la région de bande de roulement comprend une couche (5) de contact avec le sol formée d'une composition de caoutchouc de bande de roulement résistant à l'usure ayant une dureté supérieure à 55 IRHD et une couche de substrat de bande de roulement (6) d'une composition de caoutchouc, caractérisé en ce que la composition de caoutchouc résistant à la détérioration de la couche de substrat de bande de roulement (6) a une dureté supérieure à 55 IRHD et la couche (5) de contact avec le sol et la couche de substrat de bande de roulement (6) ont une élasticité comprise entre 60 et 75 % à 50 °C, mesurée au pendule "Dunlop", et une résistance à l'usure supérieure à 150 N et à 260-300 N respectivement, lors de l'essai ASTM n° D624 avec la matrice B, et la couche de contact avec le sol (5) a une résistance élevée à l'abrasion d'au moins 120 %, la résistance à l'abrasion étant définie comme étant le rapport :

(perte en volume de la composition de référence/perte en volume de la composition d'essai) x 100% l'essai étant réalisé sur une machine conforme à la norme DIN 53516, par utilisation, comme surface abrasive, d'une surface de marche de sécurité et d'une composition de référence contenant :

| | Parties % |
|---|---|
| SMR 10 | 100 |
| IRB5 | 50 |
| Acide stéarique | 2 |
| Oxyde de zinc | 5 |
| CBS | 0,5 |
| Soufre | 2,5 |
| IPPD | 1,0 |

2. Pneumatique selon la revendication 1, caractérisé en ce que la composition de caoutchouc de la bande de roulement résistant à l'usure au contact du sol est un mélange de caoutchouc naturel et de caoutchouc de butadiène contenant 10 à 90 parties de caoutchouc de butadiène pour 100 parties de caoutchouc.

3. Pneumatique selon la revendication 1, caractérisé en ce que la composition de caoutchouc de la bande de roulement résistant à l'usure qui est au contact du sol contient un mélange de caoutchouc naturel et de caoutchouc de butadiène contenant 30 à 50 parties de caoutchouc de butadiène pour 100 parties de caoutchouc.

4. Pneumatique selon l'une quelconque des revendications 1 à 3, caractérisé en ce que la composition de caoutchouc de substrat de bande de roulement contient du caoutchouc naturel.

# Fig.1.